## Europäisches Patentamt
## European Patent Office
## Office européen des brevets

(11) Numéro de publication: **0 113 053**
**A1**

(12) # DEMANDE DE BREVET EUROPEEN

(21) Numéro de dépôt: **83111945.8**

(22) Date de dépôt: **29.11.83**

(51) Int. Cl.³: **H 02 G 15/14**

(30) Priorité: **03.12.82 FR 8220254**

(43) Date de publication de la demande:
**11.07.84 Bulletin 84/28**

(84) Etats contractants désignés:
**DE FR GB IT**

(71) Demandeur: **LES CABLES DE LYON Société anonyme dite:**
**170 quai de Clichy**
**F-92111 Clichy Cedex(FR)**

(72) Inventeur: **Thevenon, Henri**
**288, rue André Philip**
**F-69003 Lyon(FR)**

(74) Mandataire: **Weinmiller, Jürgen et al,**
**Zeppelinstrasse 63**
**D-8000 München 80(DE)**

(54) Dispositif de jonction d'armures de deux câbles électriques.

(57) Dispositif de jonction d'armures de deux câbles électriques, un câble étant préalablement raccordé à l'autre et chaque câble (1, 1') possédant une armure (2, 2') de fils (3, 3') d'acier.

Ce dispositif est caractérisé en ce que chaque fil (3) d'une armure (2) est relié à un fil (3') de l'autre armure (2') par un manchon (4).

Ce dispositif de jonction est principalement utilisé pour le raccordement de deux câbles électriques armés.

FIG.1

EP 0 113 053 A1

## Dispositif de jonction d'armures de deux câbles électriques

La présente invention concerne un dispositif de jonction d'armures de deux câbles électriques, un câble étant préalablement raccordé à l'autre. Cette jonction peut correspondre à la nécessité de réunir deux extrémités de câbles électriques au cours de la pose d'une ligne de transmission, ou bien à celle d'effectuer une réparation en un point où un câble a été endommagé.

Un câble électrique, notamment un câble électrique immergé, comporte autour de lui-même une armure de fils d'acier pour le renforcer car il peut être accroché accidentellement par des objets quelconques, en particulier des chaluts de pêche ou des ancres.

Quand on réalise la jonction des extrémités de deux câbles armés, après avoir raccordé les câbles proprement dits, il faut raccorder les armures enroulées autour de chaque câble.

Les dispositifs antérieurs raccordent généralement les armures par recouvrement en imbriquant les fils d'une armure entre les fils de l'autre armure puis on réalise un frettage au niveau du recouvrement. La longueur de recouvrement est d'environ cinq à sept fois la longueur du pas d'enroulement des armures. Pour un gros câble dont le pas d'enroulement de l'armure peut atteindre un longueur d'environ 3 mètres, le recouvrement d'une armure sur l'autre conduirait à une longueur prohibitive pour une réparation effectuée sur un navire câblier.

Cette jonction par recouvrement et frettage ne supprime pas les risques de glissement en cas de tractions intempestives. De plus, dans le cas de câbles monopolaires à courant alternatif, la jonction par recouvrement n'assure pas une bonne continuité électrique entre les deux armures.

La présente invention permet de supprimer tous ces inconvénients, en proposant un dispositif qui assure une bonne jonction des extrémités des deux armures sur une longueur très courte, sans risque de glissement, ainsi qu'une bonne continuité électrique. Ce dispositif de jonction très court permet, en outre, un enroulement du câble sur un tambour ou un davier sans risque de détérioration.

La présente invention a pour objet un dispositif de jonction d'armures de deux câbles électriques, un câble étant préalablement raccordé à l'autre, chaque câble possédant une armure de fils d'acier, chaque fil d'une armure étant relié à un fil de l'autre armure par un manchon, caractérisé en ce que chaque manchon possède un filetage à pas à droite (43) correspondant au filetage d'un fil d'armure, et un filetage à pas à gauche correspondant au filetage d'un fil de l'autre armure.

De préférence, chaque manchon possède deux perçages, perpendiculaires à son axe principal, et perpendiculaire l'un par rapport à l'autre pour permettre son vissage au moyen d'une tige, et ces manchons conservent le pas de commettage des armures.

Suivant une première forme de disposition des manchons le long de la jonction, tous les manchons sont placés suivant une même position axiale, et suivant une autre forme de disposition, les manchons sont placés en quinconce suivant deux positions axiales.

Il est décrit ci-après, à titre d'exemple et en référence aux figures du dessin annexé, un dispositif de jonction des extrémités des armures de deux câbles électriques, selon deux dispositions possibles des manchons.

La figure 1 montre une première disposition dans laquelle tous les manchons sont répartis circonférentiellement et dans une même position axiale.

La figure 2 montre une deuxième disposition dans laquelle les manchons sont répartis circonférentiellement mais en quinconce suivant deux positions axiales.

La figure 3 représente un manchon seul, en coupe.

La figure 4 est une vue en coupe suivant IV de la figure 3.

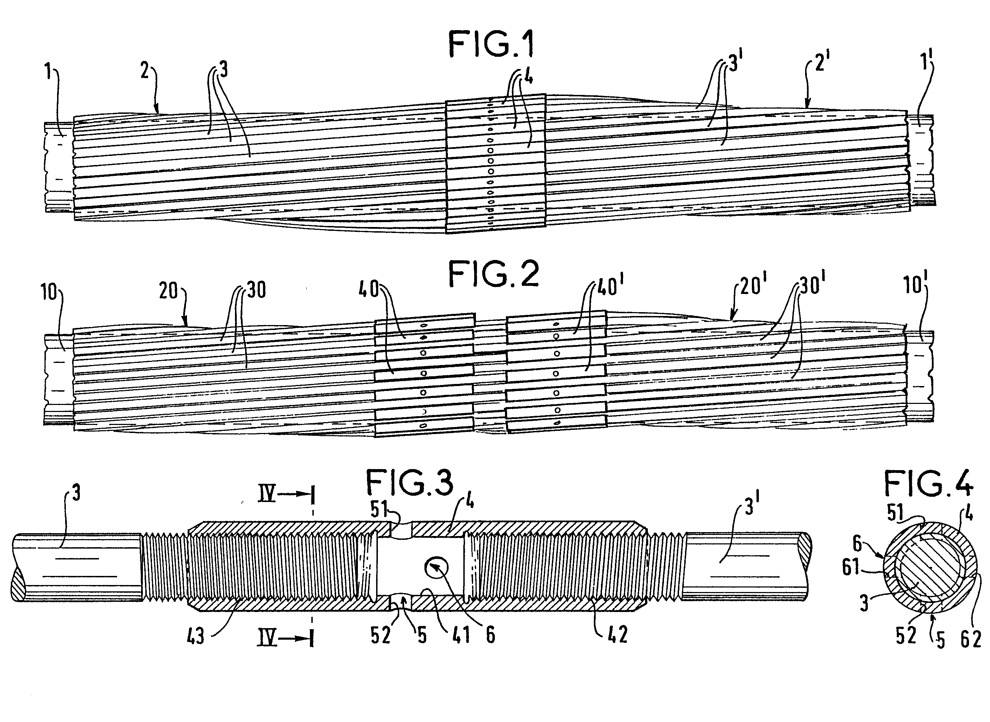

Dans la figure 1, représentant la première disposition, on voit deux extrémités 1, 1' de câble possédant chacune une armure 2, 2'. Chaque armure est composée de fils d'acier respectivement 3, 3' enroulés hélicoïdalement.

Chaque fil 3 de l'armure 2 est raccordé au fil 3' de l'armure 2' par un manchon 4. Tous les manchons 4 sont répartis circonférentiellement et suivant une même position axiale. Ces manchons sont inclinés pour respecter l'angle de commettage des fils d'armure et assurer ainsi un effort de traction constant au niveau de la jonction, puis pour ne pas faire varier la longueur du fil malgré la surépaisseur de la jonction. Pratiquement, le diamètre de chaque manchon est de l'ordre de 1,2 à 1,3 fois celui de chaque fil. Le diamètre de la jonction, au niveau des manchons, sera donc environ 30% plus grand que celui de chaque câble équipé de son armure.

Dans la figure 2 représentant la deuxième disposition, chaque extrémité de câble 10, 10' comporte respectivement une armure 20, 20' et chaque armure est composée de fils d'acier respectivement 30, 30'. Les manchons 40 sont placés en quinconce par rapport aux manchons 40'.

Dans la figure 3, on voit un manchon 4 raccordant un fil 3 d'une armure et un fil 3' d'une autre armure. Les extrémités 3, 3' sont filetés à la filière sur une longueur suffisante. Le fil 3 est fileté avec un pas à droite et le fil 3' avec un pas à gauche. Le manchon 4 est percé sur toute sa longueur d'un orifice 41, puis taraudé sur une bonne partie de sa longueur pour présenter d'un côté un filetage à droite 43 recevant le fil 3, et de l'autre côté un filetage à gauche 42 recevant le fil 3'.

Dans sa partie centrale, le manchon 4 présente deux perçages 5, 6 placés perpendiculairement à l'axe principal du manchon, mais aussi perpendiculairement l'un par rapport à l'autre, et définissant des orifices 51, 52, 61, 62 mieux visibles en figure 4, qui permettront l'introduction d'un outil quelconque pour visser ce manchon sur les deux fils au cours d'une seule opération. Bien entendu, ce manchon peut comporter, dans sa partie centrale, d'autres moyens de vissage tels que, par exemple, un profil carré ou hexagonal manoeuvrable à l'aide d'une clé appropriée.

Le manchon est de préférence réalisé dans un métal de caractéristiques mécaniques supérieures à celui de l'armure, en particulier, la résistance à la traction est supérieure de 50 à 100% à celle de chaque fil. Ceci permet de réduire le diamètre extérieur du manchon au maximum. Avantageusement, sa conductivité électrique est proche de celle des fils d'armure.

Sans sortir du cadre de l'invention, la répartition axiale des manchons au niveau de la jonction peut être quelconque, par exemple suivant trois ou quatre positions différentes.

REVENDICATIONS

1/ Dispositif de jonction d'armures de deux câbles électriques, un câble étant préalablement raccordé à l'autre et chaque câble (1, 1') possédant une armure (2, 2') de fils (3, 3') d'acier, caractérisé en ce que chaque fil (3) d'une armure (2) est relié à un fil (3') de l'autre armure (2') par un manchon (4) possèdant un filetage à pas à droite (43) correspondant au filetage d'un fil (3) d'armure, et un filetage à pas à gauche (42) correspondant au filetage d'un fil (3') de l'autre armure.

2/ Dispositif de jonction selon la revendication 1, caractérisé en ce que chaque manchon (4) possède deux perçages (5, 6), perpendiculaires à son axe principal, et perpendiculaires l'un par rapport à l'autre pour permettre son vissage au moyen d'une tige.

3/ Dispositif de jonction selon la revendication 1, caractérisé en ce que les manchons conservent le pas de commettage des armures.

4/ Dispositif de jonction selon la revendication 1, caractérisé en ce que tous les manchons (4) sont placés suivant une même position axiale le long de la jonction.

5/ Dispositif de jonction selon la revendication 1, caractérisé en ce que les manchons (40, 40') sont placés en quinconce suivant deux positions axiales le long de la jonction.

# FIG.1

# FIG.2

# FIG.3

# FIG.4

1/1

0113053

Office européen
des brevets

**RAPPORT DE RECHERCHE EUROPEENNE**

Numéro de la demande

EP 83 11 1945

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | US-A-3 592 958 (SIMPLEX)<br>* Colonne 5, lignes 25-33; figures * | 1,3,5 | H 02 G 15/14 |
| | --- | | |
| Y | US-A-1 622 940 (BLEVINS)<br>* Figures * | 1 | |
| | ----- | | |

DOMAINES TECHNIQUES
RECHERCHES (Int. Cl. ³)

H 01 R
H 02 G
F 16 G

Le présent rapport de recherche a été établi pour toutes les revendications

| Lieu de la recherche | Date d'achèvement de la recherche | Examinateur |
|---|---|---|
| LA HAYE | 09-03-1984 | RAMBOER P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82